# EUROPEAN PATENT APPLICATION

(11) **EP 4 517 182 A1**
(43) Date of publication of application: **05.03.2025**
(21) Application number: 24153663.0
(22) Date of filing: 24.01.2024
(51) Int. Cl.: F24C 15/00, H05B 6/64, F24C 15/02

(54) **COOKING APPLIANCE COMPRISING A CAMERA AND LIGHT SOURCES**

(30) Priority: 29.08.2023 KR 20230113318
(71) Applicant: LG Electronics Inc., Yeongdeungpo-gu Seoul 07336 (KR)
(72) Inventor: LEE, Yong Hyun, 08592 Seoul (KR); PARK, Kyoung-Joon, 08592 Seoul (KR); YANG, Hak Soon, 08592 Seoul (KR)
(74) Representative: Vossius & Partner Patentanwälte Rechtsanwälte mbB

(57) **Abstract**

Disclosed is a cooking appliance, wherein first lightings (120) disposed on both sides of a camera (110) irradiate light in a direction inclined downward, and each second lighting ( 130) disposed between the camera (110) and each first lighting (120) irradiates light in a direction inclined toward the camera (110) .

## Description

The present invention relates to a cooking appliance, and more specifically, to a cooking appliance having a camera for filming the inside of a cooking chamber.

A cooking appliance is a type of home appliance for cooking food and is installed in a kitchen space to cook the food based on an intention of a user. Such cooking appliance may be classified in various ways depending on a heat source used, a shape, and a type of fuel.

When classifying the cooking appliance based on a type of cooking the food, the cooking appliance may be classified into an open cooking appliance and a closed cooking appliance depending on a shape of a space where the food is placed. The closed cooking appliance includes an oven, a microwave, and the like, while the open cooking appliance includes a cooktop, a hob, and the like.

The closed cooking appliance is a cooking appliance that shields the space where the food is located and cooks the food by heating the shielded space. In the closed cooking appliance, a chamber, which is the space where the food is placed and shielded when the food is to be cooked, that is, a cooking chamber is provided inside a main body. Such cooking chamber becomes a space where the food is being cooked. In the closed cooking appliance, a door that selectively opens and closes the cooking chamber is pivotably disposed. The door is pivotably installed on the main body by a door hinge disposed between the door and the main body with the cooking chamber formed therein. Such a door may selectively open and close the cooking chamber by pivoting around a portion coupled to the main body via the door hinge.

The heat source is disposed in an internal space of the cooking chamber opened and closed by the door to heat the cooking chamber. A gas burner, an electric heater, or the like may be used as such a heat source.

Recently, a closed cooking appliance equipped with a built-in camera is being developed. Such a cooking appliance may acquire an image related to the food contained within the cooking chamber via the built-in camera. The image acquired by the built-in camera may be used to be displayed via a display disposed on the cooking appliance or a smart device of the user, and may also be used as data to control a cooking operation of the cooking appliance.

When the image acquired by the built-in camera is used as the data to control the cooking operation of the cooking appliance, the cooking appliance may analyze the food-related image acquired by the built-in camera to determine a type of food or a degree of cooking progress of the food. and control the cooking operation of the cooking appliance based on the analyzed information.

The built-in camera that provides the above function must be disposed at a location suitable for filming the inside of the cooking chamber. To this end, the built-in camera is disposed adjacent to the cooking chamber. For example, the built-in camera is typically disposed at an upper side of the cavity that forms the cooking chamber or inside the door facing the cooking chamber.

When the built-in camera is disposed inside the door, the built-in camera is usually disposed between a pair of glass sheets that form a viewing window of the door.

Typically, the viewing window is formed in the door, and the user is able to check an internal state of the cooking chamber from the outside of the cooking appliance via the viewing window. Depending on the function provided by the cooking appliance, such a viewing window may be formed by a single sheet of glass or a combination of two or more sheets of glass.

When the viewing window is formed by the two or more sheets of glass to increase a heat insulation performance of the door, the viewing window may be formed by a combination of an outer glass sheet disposed at a frontmost side of the viewing window and at least one inner glass sheet disposed at the rear of the outer glass sheet.

In the door including the viewing window formed as such, the built-in camera is disposed in a space defined between the outer glass sheet and the inner glass sheet. The built-in camera disposed inside the door as such receives light that has passed through the inner glass sheet from the inside of the cooking chamber and films an image of the inside of the cooking chamber.

To provide a high-quality image to the user and increase accuracy of analysis results on a condition of the filmed food, appropriate lighting must be disposed within the cooking chamber.

When a lighting fixture to provide lighting to the cooking chamber is disposed only at an upper side of the cooking chamber, a shadow of the food may appear large and dark on a tray on which the food is disposed. When the inside of the cooking chamber is filmed by the built-in camera disposed inside the door in such a situation, at least a portion of the food may be hidden in the shadow in the filmed image, and as a result, the condition of the food may not be expressed properly in the filmed image.

The present invention is to provide a cooking appliance with an improved structure such that a quality of an image filmed by a camera may be improved.

Further, the present invention is to provide a cooking appliance with an improved structure for the inside of a cooking chamber to be illuminated such that a shadow of food does not appear in front of the food.

Further, the present invention is to provide a cooking appliance with an improved structure such that an entire cooking chamber may be effectively illuminated while suppressing deterioration in a quality of a filmed image by light reflected from a door.

The invention is specified by the independent claim. Preferred embodiments are defined by the dependent claims. A cooking appliance, which is an embodiment of the present invention to achieve the above purpose, includes a lighting that is disposed inside a door and illuminates an area filmed by a camera, the lighting includes a first lighting disposed on at least one of one side and the other in a lateral direction of a camera and second lighting disposed between the camera and the first lighting, and the second lighting irradiates light in a direction inclined toward the camera.

In addition, in another embodiment of the present invention, first lightings disposed on both sides of a camera irradiate light in a direction inclined downward, and each second lighting disposed between the camera and each first lighting irradiates light in a direction inclined toward the camera.

A cooking appliance according to one aspect of the present invention includes a main body having a cooking chamber defined therein, a door disposed at a front side of the main body and opening and closing the cooking chamber, a camera disposed inside the door and filming the cooking chamber, and a lighting disposed inside the door and illuminating an area filmed by the camera.

The lighting includes a first lighting disposed on at least one of one side and the other side in a lateral direction of the camera, and a second lighting disposed between the camera and the first lighting.

The second lighting may irradiate light in a direction inclined toward the camera.

The second lighting may irradiate light in a direction between a direction toward a rear surface of the cooking chamber and the lateral direction toward the camera.

The first lighting may be disposed at a location biased upward from a center in a vertical direction of the door, and may irradiate light in a direction inclined downward.

The first lighting may irradiate light in a direction between a direction toward a rear surface of the cooking chamber and a direction toward a bottom surface of the cooking chamber.

The first lighting may include a pair of first lightings arranged in the lateral direction and the camera may be disposed between the pair of first lightings, and each second lighting may be disposed between the camera and each first lighting.

The first lighting and the second lighting may be disposed between an end in the lateral direction of the door and the camera, and may be disposed at locations closer to the end in the lateral direction of the door than to the camera.

The second lighting may include a pair of second lightings arranged in the lateral direction with the camera interposed therebetween, and the first lighting may include a pair of first lightings and the pair of first lightings may be arranged in the lateral direction with the camera and the pair of second lightings interposed therebetween.

The second lighting may be disposed at a location closer to the first lighting than to the camera.

The first lighting may include a light source that irradiates light in a direction inclined downward, and a diffusion member forming a plane perpendicular to the light irradiating direction of the light source and covering the light source from the rear.

The second lighting may include a light source that irradiates light rearward, and a diffusion member forming a plane inclined toward the camera and covering the light source from the rear.

The present invention may further include a supporter supporting at least one of the first lighting and the second lighting and coupled to the door.

At least one of the first lighting and the second lighting may include a light source that irradiates light rearward, and the light source may be coupled to the supporter.

The diffusion member may form a plane perpendicular to a light irradiating direction of the light source disposed in the first lighting.

The present invention may further include a supporter cover supporting the diffusion member and coupled to the supporter.

The supporter may include a first support supporting the light source disposed in the first lighting, a second support supporting the light source disposed in the second lighting, a third support supporting the camera, and a supporter main body supporting the first support, the second support, and the third support and coupled to the door.

The supporter cover may cover the supporter from the rear and be coupled to the supporter main body, a receiving space surrounded by the supporter main body and the supporter cover may be defined between the supporter main body and the supporter cover, and at least a portion of a cable connected to the camera and the light source, the camera, and the light source may be accommodated in the receiving space.

The present invention may effectively improve the quality of the results of filming by the filming module by preventing the food from being obscured by the shadow in the image filmed by the camera while ensuring the even illumination of the inside of the cooking chamber.

In addition, the present invention may prevent the shadow of the food from appearing in front of the food and allow the inside of the cooking chamber to be evenly illuminated by allowing the lighting installed in the door to irradiate light from the front upper side of the cooking chamber toward the cooking chamber.

In addition, the present invention may efficiently improve the quality of the image filmed in the cooking appliance by allowing the illumination throughout the cooking chamber, including the front central area of the cooking chamber, to be effectively achieved while suppressing the light reflections occurring inside the door from affecting the quality of the filming results.

### BRIEF DESCRIPTION OF DRAWINGS

FIG. 1 is a perspective view showing a cooking appliance according to Present Example 1 of the present invention.
FIG. 2 is a side cross-sectional view showing an internal structure of a cooking appliance shown in FIG. 1.
FIG. 3 is a rear perspective view separately showing a door shown in FIG. 1.
FIG. 4 is an enlarged view of a portion "IV" in FIG. 3.
FIG. 5 is a perspective view showing a filming module and a cable supporter shown in FIG. 3 separated from each other.
FIG. 6 is an exploded perspective view showing a disassembled state of a filming module shown in FIG. 5.
FIG. 7 is an exploded view separately showing a door shown in FIG. 1.
FIG. 8 is a cross-sectional view taken along a line "VIII-VIII" line in FIG. 7.
FIG. 9 is an enlarged view of a portion "IX" in FIG. 8.
FIG. 10 is a cross-sectional view taken along a line "X-X" in FIG. 7.
FIG. 11 is a cross-sectional view taken along a line "XI-XI" in FIG. 7.
FIG. 12 is a rear view showing a door of a cooking appliance according to Present Example 2 of the present invention.
FIG. 13 is an enlarged rear perspective view of a portion "XIII" in FIG. 12.
FIG. 14 is a cross-sectional view taken along a line "XIV-XIV" in FIG. 13.
FIG. 15 is a rear view showing a door of a cooking appliance according to Present Example 3 of the present invention.
FIG. 16 is a rear view showing a door of a cooking appliance according to Present Example 4 of the present invention.
FIG. 17 is a rear view showing a door of a cooking appliance according to Present Example 5 of the present invention.
FIG. 18 is a rear view showing a door of a cooking appliance according to Present Example 6 of the present invention.
FIG. 19 is a rear view showing a door of a cooking appliance according to Present Example 7 of the present invention.
FIG. 20 is a rear view showing a door of a cooking appliance according to Present Example 8 of the present invention.

### DETAILED DESCRIPTIONS

The above-mentioned purposes, features, and advantages will be described in detail later with reference to the attached drawings, so that those skilled in the art in the technical field to which the present invention belongs may easily implement the technical ideas of the present invention. In describing the present invention, when it is determined that a detailed description of the publicly known technology related to the present invention may unnecessarily obscure the gist of the present invention, the detailed description will be omitted. Hereinafter, a preferred embodiment according to the present invention will be described in detail with reference to the attached drawings. In the drawings, identical reference numerals are used to indicate identical or similar components.

Although first, second, and the like are used to describe various components, these components are not limited by such terms. Such terms are only used to distinguish one component from another component, and unless specifically stated to the contrary, a first component may also be a second component.

The present invention may not be limited to embodiments disclosed below, and various changes may be made and the present invention may be implemented in various different forms. The present embodiment is provided solely to ensure that the disclosure of the present invention is complete and to fully inform those skilled in the art of the scope of the invention. Therefore, it should be understood that the present invention is not limited to the embodiments disclosed below, but includes all changes, substitutes included in the technical idea and the scope of the present invention, as well as substitution of components of one embodiment with components of another embodiment and addition of components.

The attached drawings are only for easy understanding of the embodiments disclosed herein, and the technical ideas disclosed herein are not limited by the attached drawings. Further, it should be understood that the present invention includes all modifications, or substitutions that fall within the technical concept and scope of the present invention. In drawings, components may be expressed exaggeratedly large or small in size or thickness for convenience of understanding or the like, but the scope of protection of the present invention should not be interpreted as limited by the same.

The terms used herein are merely used to describe specific implementations or embodiments, and are not intended to limit the present invention. Further, singular expressions include plural expressions, unless the context clearly dictates otherwise. Herein, terms such as "include", "composed of", and the like are intended to indicate the existence of features, numbers, steps, operations, components, parts, or combinations thereof described herein. That is to say, it should be understood that terms such as "include", "composed of", and the like as used herein do not exclude in advance the presence or addition of one or more other features, numbers, steps, operations, components, parts, or combinations thereof.

Terms including ordinal numbers, such as first, second, and the like, may be used to describe various components, but the components are not limited by the terms. The above terms are used only for the purpose of distinguishing one component from another.

When a first component is described as being "connected" or "coupled" to a second component, it should be understood that the components may be directly connected or coupled to each other, but a third component may be interposed between the components. On the other hand, when it is described that the first component is "directly connected" or "directly coupled" to the second component, it should be understood that there are no other components interposed therebetween.

When a first component is described to be "on top of" or "under" a second component, it is understood that the first component may be disposed in contact with a top surface (or a bottom surface) of the second component, as well as a third component may be interposed therebetween.

Unless otherwise defined, all terms used herein, including technical or scientific terms, have the same meaning as commonly understood by a person of ordinary skill in the technical field to which the present invention pertains. Terms defined in commonly used dictionaries should be interpreted as having a meaning consistent with the meaning in the context of the related technology, and unless explicitly defined in the present application, should not be interpreted in an ideal or excessively formal sense.

When a cooking appliance is placed on the floor, a side on which a door is installed, relative to a center of the cooking appliance is defined as a front side. Therefore, a direction of opening the door and entering the cooking appliance becomes a rearward direction. For convenience, a direction between the front side and a rear side may be referred to as a first direction. Then, the front side may be referred to as one side in the first direction, and the rear side may be referred to as the other side in the first direction.

Additionally, the direction of gravity may be defined as a downward direction, and a direction opposite to the direction of gravity may be defined as an upward direction.

In addition, a horizontal direction orthogonal to a front and rear direction of the cooking appliance, that is, a width direction of the cooking appliance when viewing the cooking appliance in front of the door thereof, may be referred to as a left and right direction. For convenience, the left and right direction may be referred to as a second direction. Then, a right side may be referred to as one side in the second direction, and a left side may be referred to as the other side in the second direction.

In addition, a width direction of the cooking appliance may be referred to as a lateral direction. Then, a right side may be referred to as one side in the lateral direction, and a left side may be referred to as the other side in the lateral direction.

In addition, the vertical direction described above may be referred to as a third direction. Then, an upper side may be referred to as one side in the third direction, and a lower side may be referred to as the other side in the third direction.

Additionally, the vertical direction described above may be referred to as a height direction. Then, the front and rear direction and the left and right direction, that is, the first direction and the second direction may be referred to as a transverse direction.

Throughout the present document, "A and/or B" means A, B, or A and B, unless otherwise specified, and "C to D" means equal to or greater than C and equal to or smaller than D unless otherwise specified.

### [Overall structure of cooking appliance]

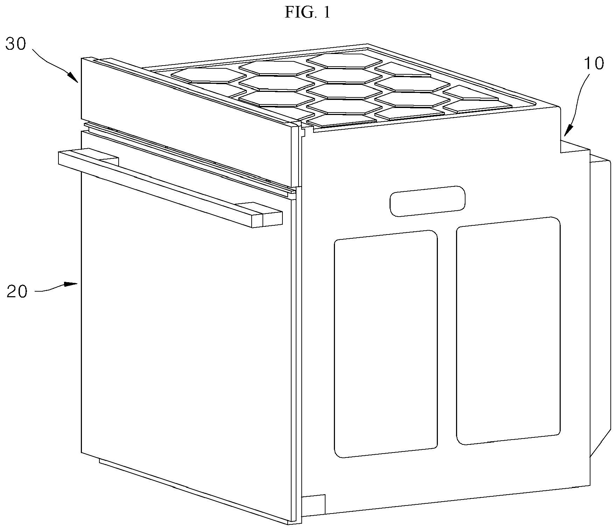

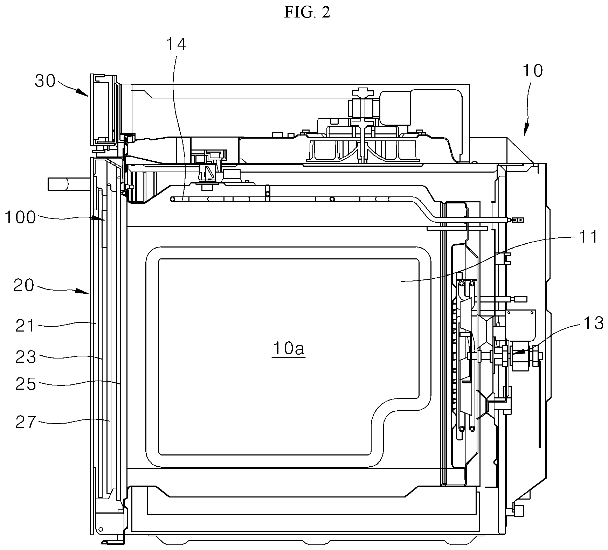

FIG. 1 is a perspective view showing a cooking appliance according to Present Example 1 of the present invention, and FIG. 2 is a side cross-sectional view showing an internal structure of a cooking appliance shown in FIG. 1.

Referring to FIGS. 1 and 2, an outer appearance of a cooking appliance may be formed by a main body 10. The main body 10 may have a substantially rectangular parallelepiped shape and may be made of a material with a predetermined strength to protect multiple components installed in an internal space thereof.

The main body 10 includes a cavity 11 that forms a skeleton of the main body 10. The cavity 11 may be formed in a shape of a hexahedron with an open front surface, and a cooking chamber 10a may be defined inside such a cavity 11. That is, the cooking chamber 10a may be defined as an approximately hexahedral space defined inside the cavity 11 and may be defined as a space that is open forwards.

In a state in which such a cooking chamber 10a is shielded, food may be cooked as the inside of the cooking chamber 10a is heated. That is, in the cooking appliance in the present embodiment provided as a closed cooking appliance, the cooking chamber 10a is a space where the food is actually cooked.

The cooking appliance has a heater that heats the cooking chamber 10a. such a heater may be formed as a heating device using gas fuel. As another example, the heater may be formed as a heater that uses electricity. Depending on a type of heat source used, a structure of the heater may change.

In the present embodiment, the heater is illustrated as being formed as the heating device using the gas fuel. Accordingly, a broil burner 14 may be disposed above the cooking chamber 10a, and a convection device 13 may be disposed at the rear of the cooking chamber 10a.

The broil burner 14 may heat an internal space of the cooking chamber 10a from above. In addition, the convection device 13 sucks in and heats air from the internal space of the cooking chamber 10a and then discharges the heated air into the internal space of the cooking chamber 10a, causing the air to flow, so that the internal space of the cooking chamber 10a may be heated evenly.

The cooking appliance may have a pivotable door 20 that selectively opens and closes the cooking chamber 10a. As an example, the door 20 may be formed in a shape of opening and closing the cooking chamber 10a in a pull-down scheme in which an upper end thereof pivots in a vertical direction around a lower end thereof.

A control panel 30 may be disposed on an upper portion of a front surface of the cooking appliance, that is, on an upper portion of the front surface of the cavity 11. The control panel 30 may form a portion of a front surface outer appearance of the cooking appliance. Such a control panel 30 may have various switches for adjusting an operation of the cooking appliance, a display that displays an operating state of the cooking appliance, and the like.

### [Structure of door]

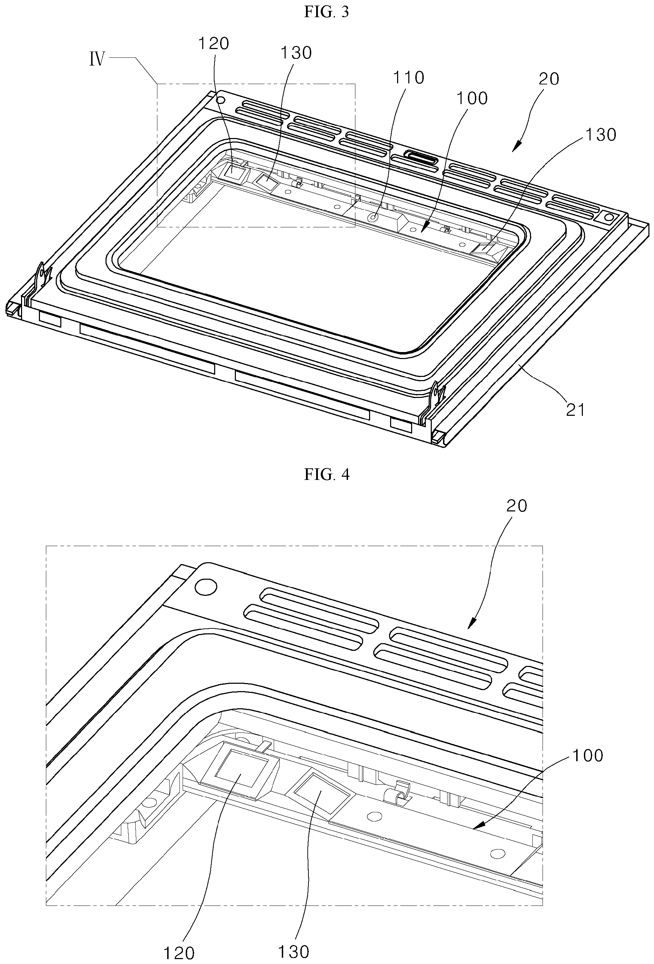

FIG. 3 is a rear perspective view separately showing a door shown in FIG. 1.

Referring to FIGS. 2 and 3, the door 20 may include a door frame 21 and an outer glass sheet 23.

The door frame 21 may form a skeleton of the door 20 and may form an outer appearance of a top surface, a bottom surface, and side surfaces of the door 20. Such a door frame 21 may be formed in a hexahedral shape with open front and rear surfaces.

As an example, the door frame 21 may include a front frame that forms the front surface of the door 20, and a rear frame that forms the rear surface of the door 20. The door frame 21 may be formed in a shape in which the front frame and the rear frame are coupled to each other. In addition, the outer glass sheet 23 and inner glass sheets 25 and 27, which will be described later, may be disposed inside the door frame 21 surrounded by the front frame and the rear frame.

A hinge that pivotably couples the door frame 21 to the main body 10 may be installed at a lower side of the door frame 21. Such a hinge may be installed at a lower end of the door frame 21, but may be installed at each of both sides of the door frame 21.

A through-hole may be defined in the door frame 21. Such a through-hole may be defined in a shape of a hollow that extends through the door frame 21 in the front and rear direction. The door frame 21 having such a through-hole may be formed in an approximately " 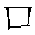 " shape.

A viewing window may be formed in a portion where the through-hole is defined. The outer glass sheet 23 may be disposed on a front side of the main body 10 and may form at least a portion of the viewing window. As an example, the outer glass sheet 23 may be formed in a shape that includes a glass sheet that reflects the cooking chamber 10a to the outside of the door 20.

The outer glass sheet 23 may cover the through-hole and may be coupled to the door frame 21. Such an outer glass sheet 23 may be disposed at a frontmost side of the viewing window to form a front surface of the viewing window, and may form a front surface outer appearance of the door 20 together with the door frame 21.

Additionally, the door 20 may further include the one or more inner glass sheets 25 and 27. The inner glass sheets 25 and 27 may be disposed between the outer glass sheet 23 and the main body 10, and may form a viewing window together with the outer glass sheet 23. As an example, the inner glass sheets 25 and 27, like the outer glass sheet 23, may be formed in a shape that includes glass sheets that reflect the cooking chamber 10a to the outside of the door 20.

In the present embodiment, it is illustrated that three sheets of glass are disposed in the door 20. For example, the viewing window may be formed by the three sheets of glass, and the two inner glass sheets 25 and 27, that is, the rear glass sheet 25 and a mid glass sheet 27, may be disposed between the outer glass sheet 23 and the main body 10.

The rear glass sheet 25 may be coupled to the door frame 21 at a rear side of the door frame 21 and may form a rear surface outer appearance of the door 20. The mid glass sheet 27 may be disposed between the outer glass sheet 23 and the rear glass sheet 25 with respect to the front and rear direction. Such a mid glass sheet 27 may be coupled to the door frame 21 between the outer glass sheet 23 and the rear glass sheet 25.

In the present embodiment, it is illustrated that the single mid glass sheet 27 is disposed between the outer glass sheet 23 and the rear glass sheet 25. As another example, the two or more mid glass sheets 27 may be disposed between the outer glass sheet 23 and the rear glass sheet 25.

As described above, the interior of the door 20 may be divided into a plurality of spaces arranged in the front and rear direction by the glass sheets 23, 25, and 27 disposed in the door 20. The glass sheets 23, 25, and 27 arranged as such may form the viewing window that allows a user to check the inside of the cooking chamber 10a, and at the same time, suppress heat transferred from the inside of the cooking chamber 10a to the door 20 from being transferred to the front surface of the door 20.

As described above, external air may flow into the door 20 where the mid-glass sheets 27 are arranged. For example, external air may flow into the door 20 via the open lower end of the door 20. The air introduced into the door 20 as such may cool the door 20 by passing through the inside of the door 20.

### [Overall structure of filming module]

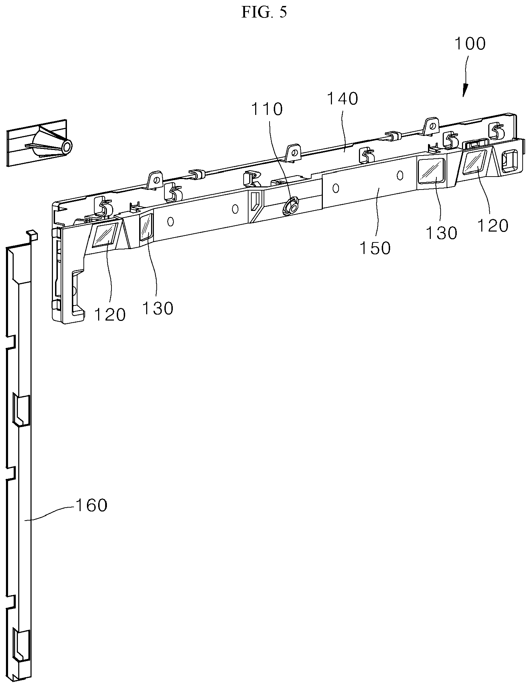

FIG. 3 is a rear perspective view separately showing a door shown in FIG. 1, and FIG. 4 is an enlarged view of a portion "IV" in FIG. 3. In addition, FIG. 5 is a perspective view showing a filming module and a cable supporter shown in FIG. 3 separated from each other.

As shown in FIGS. 3 and 4, the cooking appliance in the present embodiment may include a filming module 100. The filming module 100 may be installed inside the cooking appliance and may be constructed to film the cooking chamber 10a.

The filming module 100 may be disposed at a front side of the cooking chamber 10a. As an example, the filming module 100 may be installed in the door 20. Such a filming module 100 may be disposed inside the door 20, and may be disposed in the area where the viewing window is formed. That is, the filming module 100 may be disposed in the space defined between the outer glass sheet 23 and the inner glass sheets 25 and 27.

Additionally, the filming module 100 may be disposed at a location biased upward from a center in the vertical direction of the door 20. Such a filming module 100 may acquire an image related to the food accommodated inside the cooking chamber 10a by filming the inside of the cooking chamber 10a from a front upper side of the cooking chamber 10a.

As an example, the filming module 100 may be disposed adjacent to an upper end of the viewing window. Such a filming module 100 may not only be disposed at a location where the food inside the cooking chamber 10a may be effectively filmed, but also be disposed at a location that less obstructs view from the viewing window.

As described above, the filming module 100 disposed inside the door 20 may include a camera 110. The camera 110 may be disposed inside the door 20, approximately at a center in the lateral direction of the door 20. Such a camera 110 may more effectively film most areas of the cooking chamber 10a by filming the inside of the cooking chamber 10a from the front upper side and a center in the lateral direction of the cooking chamber 10a.

As an example, the camera 110 may include one or more image sensors. As the image sensor, a CCD, a CMOS, or the like may be used. As an example, the image sensor may be provided in a form of being mounted on a circuit board. In this regard, the image sensor may be disposed on a rear surface of the circuit board facing the cooking chamber 10a.

Additionally, the camera 110 may include a lens unit. The lens unit may include at least one lens. As an example, the lens unit may be provided in a form in which a plurality of lenses arranged along the front and rear direction are accommodated in a barrel.

The lens unit may collect light reflected from a subject and form an optical image in an imaging area, and the image sensor may receive the light incident through the lens unit and convert the light into an image signal.

In addition, the camera 110 may further include various processors necessary to compose an image based on the image signal output from the image sensor.

The camera 110 constructed as described above may be disposed to be directed in a direction inclined downward, that is, a direction between a direction toward the rear surface of the cooking chamber 10a and a direction toward the bottom surface of the cooking chamber 10a.

That is, the camera 110 may be disposed to face the cooking chamber 10a from the front side of the cooking chamber 10a and look down at the cooking chamber 10a from a front side of an upper area of the cooking chamber 10a. Additionally, the camera 110 may be disposed adjacent to the upper end of the viewing window.

Such a camera 110 may effectively film the food inside the cooking chamber 10a while looking down on the food inside the cooking chamber 10a from the location that less obstructs the view through the viewing window.

In one example, the filming module 100 may include lightings 120 and 130. The lightings 120 and 130 may be disposed inside the door 20 together with the camera 110. Such lightings 120 and 130 are constructed to illuminate the area filmed by the camera 110.

The lightings 120 and 130 may include the first lighting 120. The first lighting 120 is constructed to illuminate at least a portion of the area filmed by the camera 110. Such first lighting 120 may be disposed on at least one of one side and the other side in the lateral direction of the camera 110.

In the present embodiment, the first lighting 120 is illustrated as being disposed on each of both sides of the camera 110. As an example, a pair of first lightings 120 may be arranged in the lateral direction with the camera 110 interposed therebetween.

Each first lighting 120 may irradiate light in the direction inclined downward. That is, each first lighting 120 may irradiate light in the direction between the direction toward the rear surface of the cooking chamber 10a and the direction toward the bottom surface of the cooking chamber 10a. A detailed structure of the first lighting 120 related thereto will be described later.

The lightings 120 and 130 may include the second lighting 130. The second lighting 130, like the first lighting 120, is constructed to illuminate at least a portion of the area filmed by the camera 110.

The second lighting 130 may be disposed on at least one of one side and the other side in the lateral direction of the camera 110. Such a second lighting 130 may be disposed between the camera 110 and the first lighting 120.

In the present embodiment, the second lighting 130 is illustrated as being disposed on each of both sides of the camera 110. As an example, a pair of second lightings 130 may be arranged in the lateral direction with the camera 110 interposed therebetween. In addition, each second lighting 130 may be disposed between the camera 110 and each first lighting 120.

For example, the pair of second lightings 130 may be arranged in the lateral direction with the camera 110 interposed therebetween, and the pair of first lighting 120 may be arranged in the lateral direction with the camera 110 and the pair of second lightings 130 interposed therebetween.

Each second lighting 130 may irradiate light in an inclined direction toward the camera 110. That is, each second lighting 130 may irradiate light in a direction between the direction toward the rear surface of the cooking chamber 10a and a lateral direction toward the camera 110. A detailed structure of the second lighting 130 related thereto will be described later.

In one example, in the present embodiment, it is illustrated that the pair of first lightings 120 and the pair of second lightings 130 are arranged in the filming module 100, but the present invention is not limited thereto. Considering a size of the cooking appliance, a brightness of the lighting, and the like, the numbers of first lightings 120 and second lightings 130 may be increased or decreased appropriately as needed.

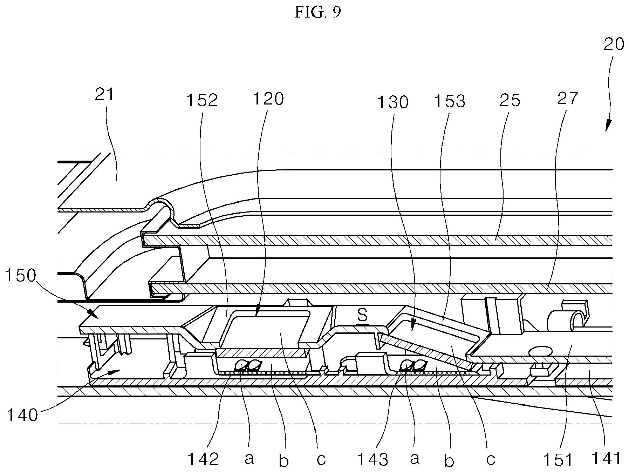

Each of the first lighting 120 and the second lighting 130 may include a light source a (see FIG. 9). The light source a is constructed to irradiate light to the cooking chamber 10a. Such a light source a may irradiate light rearward.

As an example, the light source a may include an LED mounted on a circuit board b. In one example, in addition to the LED, various types of components that may irradiate light may be applied as the light source a of the present embodiment. Additionally, the number of light sources a disposed in each of the first lighting 120 and the second lighting 130 may be appropriately determined depending on an intensity and an area of a lighting effect to be realized via the light source a.

Additionally, each of the first lighting 120 and the second lighting 130 may include a diffusion member c (see FIG. 9). The diffusion member c is disposed to cover the light source a from the rear. Such a diffusion member c may diffuse the light irradiated from the light source a and transmit the diffused light toward the cooking chamber 10a.

In one example, referring to FIGS. 3 to 5, the filming module 100 may further include a supporter 140. The supporter 140 may support at least one of the first lighting 120 and the second lighting 130 and may be coupled to the door 20. In the present embodiment, it is illustrated that the supporter 140 supports the first lighting 120 and the second lighting 130 and is coupled to the outer glass sheet 23 of the door 20.

Additionally, the filming module 100 may further include a supporter cover 150. The supporter cover 150 may cover the supporter 140 from the rear and be coupled to the supporter 140. Between the supporter 140 and the supporter cover 150 coupled to each other in the front and rear direction, a receiving space surrounded by the supporter 140 and the supporter cover 150 may be defined. That is, the receiving space may be defined inside a combination body formed by the coupling of the supporter 140 and the supporter cover 150.

In the receiving space defined as described above, the light sources of the first lighting 120 and the second lighting 130, the camera 110, and the like may be accommodated. Additionally, at least a portion of a cable connected to the camera 110 and the light source a may be accommodated in the receiving space.

In addition, the cooking appliance in the present embodiment may further include a cable supporter 160. The cable supporter 160 is disposed to support at least a portion of the cable connected to the camera 110 and the light source a. As an example, the cable supporter 160 is disposed to accommodate the cable therein and support the cable.

As an example, the cable supporter 160 may be formed in a shape including a rectangular shape in which a length in the vertical direction is greater than a length in the lateral direction. Such a cable supporter 160 may be disposed adjacent to an end in the lateral direction of the door 20.

The cable supporter 160 may be connected to an end in the lateral direction of the supporter 140 and may be formed in a shape extending downward from the supporter 140. For example, the supporter 140 and the cable supporter 160 may be connected to each other in approximately a "Γ" shape.

According to the present embodiment, a plurality of cables may be inserted into the space between the outer glass sheet 23 and the inner glass sheets 25 and 27, that is, a receiving space S, and each cable may be connected to each of the camera and the light source a in the receiving space S.

The cable connected to the camera 110 or the light source a may extend in the lateral direction toward the end in the lateral direction of the supporter 140, extend downward from the end in the lateral direction of the supporter 140, and be inserted into the cable supporter 160. Such a cable may extend to the lower end of the door 20 via the inside of the cable supporter 160, and may extend toward the main body 10 at a location adjacent to the hinge disposed at the lower end of the door 20 and be connected to the main body 10.

That is to say, the cable connected to the camera 110 or the light source a may be guided to locations adjacent to the upper end and the end in the lateral direction of the door 20 by the supporter 140 and the cable supporter 160.

The cable supporter 160 may support the cable such that a portion of the cable connected to the camera 110 or the light source a may be guided to the location adjacent to the end in the lateral direction of the door 20, and may surround the cable from the outside to protect the cable from heat, impact, and the like.

### [Structures of supporter and supporter cover]

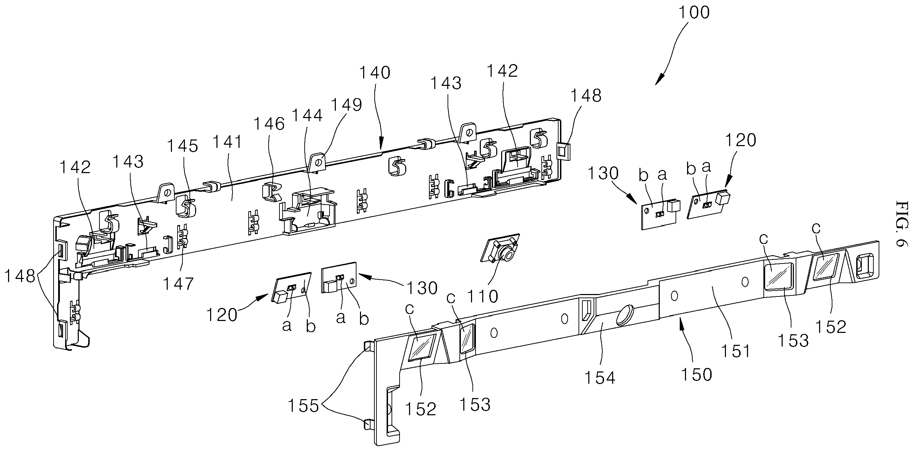

FIG. 6 is an exploded perspective view showing a disassembled state of a filming module shown in FIG. 5.

Referring to FIGS. 4 to 6, the supporter 140 may include a supporter main body 141. The supporter main body 141 may form a skeleton and most of an outer appearance of the supporter 140. As an example, the supporter main body 141 may be formed in an approximately rectangular shape.

For example, the supporter main body 141 may be formed in a rectangular shape in which a length in the lateral direction is greater than a length in the vertical direction. The length in the lateral direction of the supporter main body 141 may be set to approximately a length corresponding to a length in the lateral direction of the door 20, more specifically, a length between the length in the lateral direction of the door 20 and a length in the lateral direction of the viewing window.

The supporter 140 may include a first support 142 and a second support 143. The first support 142 is disposed to support the light source a disposed in the first lighting 120, and the second support 143 is disposed to support the light source a disposed in the second lighting 130. Specific structures of the first support 142 and the second support 143 will be described later.

Additionally, the supporter 140 may include a third support 144. The third support 144 is disposed to support the camera 110. As an example, the third support 144 may support the camera 110 in a form of supporting the circuit board on which the image sensor is mounted.

For example, the third support 144 may include a plurality of support protrusions that support the circuit board of the camera 110. Such support protrusions may support a front surface of the circuit board at a front side of the camera 110.

Additionally, the third support 144 may further include a hook member that supports the circuit board from the rear. The circuit board of the camera 110 may be fitted into the third support 144 in a form of being fitted between the support protrusions and the hook member.

The first support 142, the second support 143, and the third support 144 may be supported by the supporter main body 141. As an example, the first support 142, the second support 143, and the third support 144 may be formed integrally with the supporter main body 141. For example, the second support 143 and the third support 144 may be formed to protrude from the supporter main body 141.

The supporter 140 may further include cable supports 145 and 146. The cable supports 145 and 146 are constructed to support the cable connected to the camera 110 or the light source a. Such cable supports 145 and 146 may include a plurality of fitting protrusions arranged in the lateral direction.

As an example, the cable supports 145 and 146 may include the first fitting protrusion 145 and the second fitting protrusion 146. The first fitting protrusion 145 may be formed in an open ring shape with an open upper side. In addition, the second fitting protrusion 146 may be formed in an open ring shape with an open front side.

The cable may be coupled to the first fitting protrusion 145 by being fitted thereinto in the vertical direction, and may be coupled to the second fitting protrusion 146 by being fitted thereinto in the front and rear direction. That is, the cable may be stably fixed to the supporter 140 without being easily separated from the cable supports 145 and 146 by being fitted into the first fitting protrusion 145 and the second fitting protrusion 146 in different directions.

As an example, a plurality of first fitting protrusions 145 may be arranged in the lateral direction at a vertical level higher than those of the first support 142, the second support 143, and the third support 144. The second fitting protrusion 146 may be disposed between the plurality of first fitting protrusions 145.

Additionally, the supporter 140 may further include a front coupling portion 147. The front coupling portion 147 may be disposed for coupling of the supporter main body 141 and the supporter cover 150. As an example, the supporter cover 150 may have a front coupling protrusion that protrudes forward from the supporter cover 150, and such front coupling protrusion may be detachably fitted into the front coupling portion 147.

Additionally, the supporter 140 may further include a side coupling portion 148. The side coupling portion 148 may be disposed for the coupling of the supporter main body 141 and the supporter cover 150. As an example, the supporter cover 150 may have a side coupling protrusion 155 that protrudes in the lateral direction from the supporter cover 150, and such side coupling protrusion 155 may be detachably fitted into the side coupling portion 148. The side coupling portion 148 and the side coupling protrusion 155 may be disposed at each of both ends of the supporter main body 141 and each of both ends of the supporter cover 150, respectively.

As an example, the front coupling portion 147 may be constructed to be elastically deformable in the vertical direction or the lateral direction, and the side coupling portion 148 may be constructed to be elastically deformable in the lateral direction.

The coupling and separation between the side coupling portion 148 and the side coupling protrusion 155 may be accomplished in a state in which the pair of side coupling portions 148 are spread in the lateral direction. Additionally, work for coupling and separation of the front coupling portion 147 and the front coupling protrusion may be done in a form of pressing the supporter cover 150 to the supporter 140 or widening a gap between the supporter 140 and the supporter cover 150.

That is to say, the work for coupling and separation of the supporter 140 and the supporter cover 150 may be done easy and quickly by simply pressing the supporter cover 150 to the supporter 140 or widening the gap between the supporter 140 and the supporter cover 150 with the side coupling portions 148 spread.

In addition, the supporter 140 may further include a door coupling portion 149. The door coupling portion 149 may be disposed for coupling of the supporter 140 and the door 20. As an example, the door coupling portion 149 may be formed in a shape of a protrusion protruding from the supporter main body 141 and may be coupled to the door frame 21. Such a door coupling portion 149 may be formed a shape of a protrusion protruding upward from the supporter main body 141, and may be coupled to the door frame 21 via a fastening member such as a screw.

In one example, the supporter cover 150 may include a cover body 151. The cover body 151 may form a skeleton and most of an outer appearance of the supporter cover 150. As an example, the cover body 151 may be formed in a substantially rectangular shape. For example, the cover body 151 may be formed in a rectangular shape similar to the shape of the supporter main body 141.

The supporter cover 150 may include a first cover 152 and a second cover 153.

The first cover 152 is disposed to support the diffusion member c disposed in the first lighting 120, and the second cover 153 is disposed to support the diffusion member c disposed in the second lighting 130. Specific structures of the first cover 152 and the second cover 153 will be described later.

Additionally, the supporter 140 may include the third cover 154. The third cover 154 is disposed to cover the camera 110 from the rear. As an example, the third cover 154 may be formed to protrude rearward from the cover body 151.

The camera 110 may be accommodated in an internal space of the third cover 154 protruding as such. Additionally, a through-hole may be defined to extend through the third cover 154 in the front and rear direction, and the lens unit of the camera 110 may be exposed to the outside of the supporter cover 150 via such through-hole.

### [Structure of lighting]

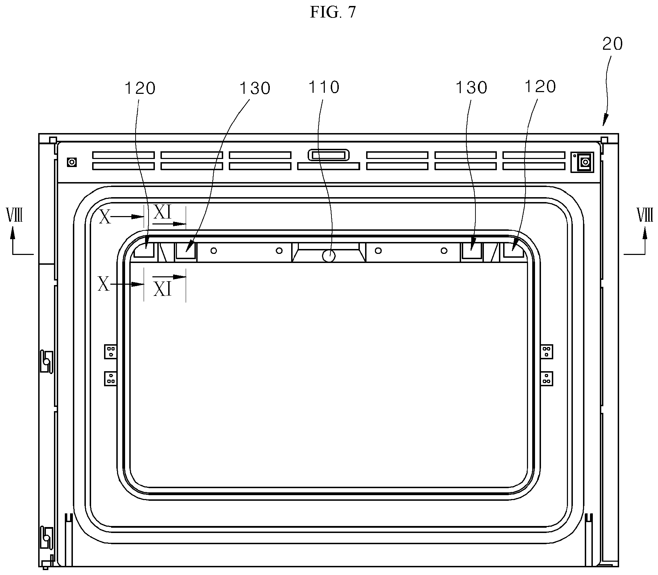

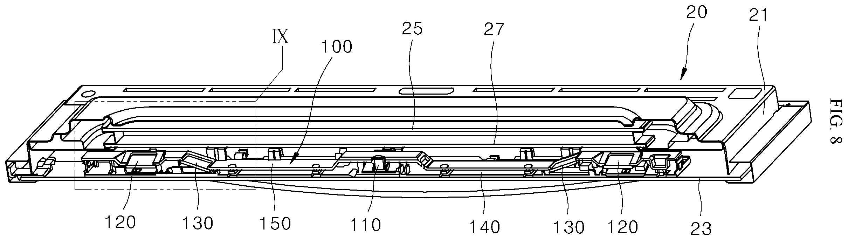

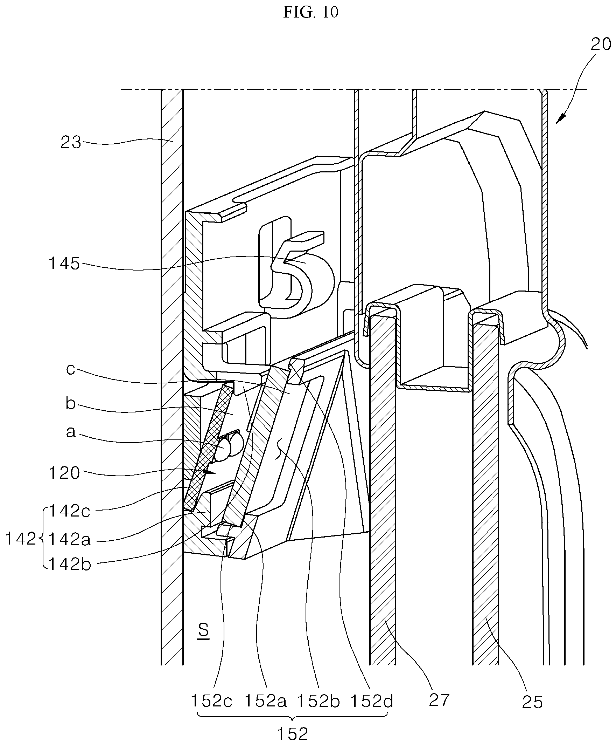

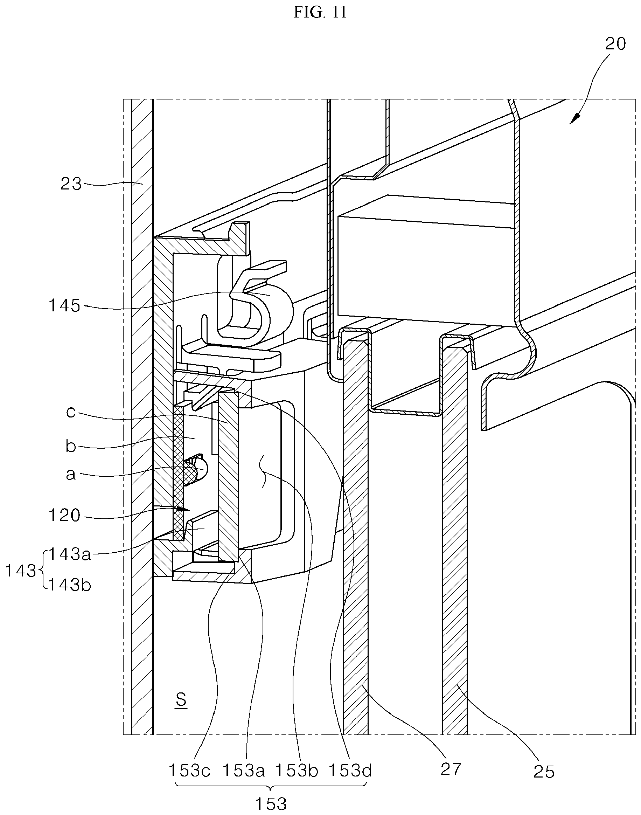

FIG. 7 is an exploded view separately showing a door shown in FIG. 1, FIG. 8 is a cross-sectional view taken along a line "VIII-VIII" line in FIG. 7, and FIG. 9 is an enlarged view of a portion "IX" in FIG. 8. In addition, FIG. 10 is a cross-sectional view taken along a line "X-X" in FIG. 7, and FIG. 11 is a cross-sectional view taken along a line "XI-XI" in FIG. 7.

Referring to FIGS. 7 and 8, the filming module 100 may include the camera 110, the lightings 120 and 130, and the supporter 140, and the camera 110 and the lightings 120 and 130 may be arranged in the lateral direction on the supporter 140.

As an example, the camera 110 may be disposed between the pair of first lightings 120 arranged in the lateral direction. In addition, each second lighting 130 may be disposed between the camera 110 and each first lighting 120.

That is, in the filming module 100, the pair of second lightings 130 may be disposed on both sides of the camera 110 with the camera 110 located at the center in the lateral direction interposed therebetween, and the pair of first lightings 120 may be disposed on both sides of the camera 110 and the second lightings 130 with the camera 110 and the second lightings 130 interposed therebetween.

Referring to FIGS. 7 to 9, the filming module 100 may be disposed in the space S (hereinafter, referred to as the "receiving space") between the outer glass sheet 23 and the inner glass sheets 25 and 27. As an example, the filming module 100 may be disposed together with the camera 110 in the space defined between the outer glass sheet 23 and the mid glass sheet 27.

As described above, the first lighting 120 may be disposed at an outermost side in the lateral direction of the filming module 100 disposed in the receiving space S. Each first lighting 120 disposed at each of both outermost sides of the filming module 100 may include the light source a and the diffusion member c.

In the first lighting 120, the light source a is disposed to irradiate light in the direction inclined downward. That is to say, the light source a of the first lighting 120 may irradiate light toward the cooking chamber 10a, in the direction between the direction toward the rear surface and the direction toward the bottom surface of the cooking chamber 10a. Such a light source a may provide illumination to the inside of the cooking chamber 10a in a form of flashing light toward the cooking chamber 10a from a location biased upward from a center in the vertical direction of the cooking chamber 10a.

The diffusion member c may cover the light source a from the rear and may diffuse the light irradiated from the light source a. In the first lighting 120, the diffusion member c may be formed in a shape that forms a plane perpendicular to a direction in which the light source a irradiates light.

As an example, the diffusion member c may form an inclined surface inclined downward. For example, the circuit board b on which the light source a of the first lighting 120 is mounted may be formed in a plane shape inclined downward, and the diffusion member c may form a plane parallel to the circuit board b.

The diffusion member c formed as described above may diffuse the light irradiated from the light source a, and flash the light toward the cooking chamber 10a in the direction inclined downward.

In the filming module 100, the second lighting 130 may be disposed between the camera 110 and the first lighting 120. Each second lighting 130, like the first lighting 120, may include the light source a and the diffusion member c.

In the second lighting 130, the light source a is disposed to irradiate light in the rearward direction. In addition, the diffusion member c may form a plane inclined toward the camera 110 and cover the light source a from the rear. Such a diffusion member c may diffuse the light irradiated from the light source a, and flash the light toward the cooking chamber 10a, in a direction inclined toward the camera 110, that is, a direction inclined toward the center in the lateral direction of the door 20.

The first lighting 120 and the second lighting 130 may be coupled to the supporter 140 via the first support 142 and the second support 143, respectively.

Referring to FIGS. 9 and 10, the first support 142 may support the first lighting 120 in a form of supporting the circuit board b on which the light source a is mounted. As an example, the first support 142 may include a first locking protrusion 142a and a second locking protrusion 142b.

The first locking protrusion 142a and the second locking protrusion 142b may be disposed to face each other with the circuit board b interposed therebetween, and may be disposed in the vertical direction. The first locking protrusion 142a is disposed to support a lower side of the circuit board b, and the second locking protrusion 142b is disposed to support an upper side of the circuit board b.

The first locking protrusion 142a and the second locking protrusion 142b may be formed in a shape that protrudes rearward from a rear surface of the supporter main body 141. In the present embodiment, it is illustrated that each of the first locking protrusion 142a and the second locking protrusion 142b is formed in a shape of a hook member protruding rearward from the rear surface of the supporter main body 141.

A fitting groove 142c may be defined in front of the first locking protrusion 142a, and the fitting groove 142c may be defined in a shape in which a portion of the rear surface of the supporter main body 141 is concave forward or a shape in which a portion of the supporter main body 141 is penetrated in the front and rear direction.

The first locking protrusion 142a may be disposed in front of the fitting groove 142c, but may be disposed at a location more forwardly biased than the fitting groove 142c. In addition, the second locking protrusion 142b may be disposed above the first locking protrusion 142a, and may be disposed at a location more forwardly biased than the fitting groove 142c and the first locking protrusion 142a.

In the first lighting 120, the lower side of the circuit board b may be inserted into the fitting groove 142c. Accordingly, the lower side of the circuit board b may be disposed at a location more forwardly biased than the upper side of the circuit board b.

The first locking protrusion 142a may support the lower side of the circuit board b inserted into the fitting groove 142c as such from the rear and press the lower side of the circuit board b forward. Accordingly, a front surface of the circuit board b may be in close contact with the supporter main body 141, and the lower side of the circuit board b may be fitted between the rear surface of the supporter main body 141 and the first locking protrusion 142a and in the fitting groove 142c. In this way, a location in the front and rear direction of the lower side of the circuit board b may be constrained.

The upper side of the circuit board b may be fitted between the supporter main body 141 and the second locking protrusion 142b. The second locking protrusion 142b may press the upper side of the circuit board b forward while supporting the upper side of the circuit board b from the rear.

Accordingly, the front surface of the circuit board b may be in close contact with the supporter main body 141, and the upper side of the circuit board b may be fitted between the rear surface of the supporter main body 141 and the second locking protrusion 142b. In this way, a location in the front and rear direction of the upper side of the circuit board b may be constrained.

As an example, the second locking protrusion 142b may be formed to be elastically deformable in the vertical direction. Work to couple the circuit board b of the first lighting 120 to the first support 142 may be achieved in a form of inserting the lower side of the circuit board b into the fitting groove 142c, then pulling the second locking protrusion 142b upward to widen a gap between the first locking protrusion 142a and the second locking protrusion 142b, and then fitting the upper side of the circuit board b between the supporter main body 141 and the second locking protrusion 142b.

In addition, an inclined surface may be formed on a front surface of the second locking protrusion 142b. The inclined surface may be formed to be inclined downward forwardly.

When the upper side of the circuit board b is pressed forward while the lower side of the circuit board b is fitted into the fitting groove 142c, the circuit board b may move forward while pushing the second locking protrusion 142b, and then be fitted between the rear surface of the supporter main body 141 and the second locking protrusion 142b. That is to say, the inclined surface formed on the front surface of the second locking protrusion 142b may contribute to making assembly of the first lighting 120 easier.

The first support 142 coupled to the circuit board b as described above may support the circuit board b such that the circuit board b remains inclined downward. Suh a first support 142 may support the first lighting 120 such that the first lighting 120 may irradiate light in the direction inclined downward.

In one example, the first cover 152 disposed on the supporter cover 150 may be disposed at a rear area of the first lighting 120. The first cover 152 may have a first rear support surface 152a and a first through-hole 152b.

The first rear support surface 152a is disposed to support the diffusion member c disposed in the first lighting 120 from the rear. Such a first rear support surface 152a may form a plane parallel to the diffusion member c disposed in the first lighting 120, for example, an inclined surface inclined downward.

The first through-hole 152b may be defined to extend through the first rear support surface 152a in the front and rear direction. Such a first through-hole 152b may form a passage for exposing the diffusion member c to the rear of the supporter cover 150 in the first rear support surface 152a.

The first cover 152 may include a first lower support surface 152c. The first lower support surface 152c may be disposed at a lower vertical level than the first through-hole 152b and may protrude forward from the first rear support surface 152a. the diffusion member c may be seated on the first lower support surface 152c, and the first lower support surface 152c may support the diffusion member c from below.

Additionally, the first cover 152 may further include a first upper support surface 152d. The first upper support surface 152d may be disposed at a higher vertical level than the first through-hole 152b and may protrude forward from the first rear support surface 152a. The diffusion member c may be inserted into a space between the first lower support surface 152c and the first upper support surface 152d, and a location in the vertical direction of the diffusion member c may be regulated by the first lower support surface 152c and the first upper support surface 152d.

As described above, when the supporter cover 150 and the supporter 140 are coupled to each other in the front and rear direction with the diffusion member c fitted between the first lower support surface 152c and the first upper support surface 152d, the diffusion member c may be fitted between the first rear support surface 152a and the locking protrusions 142a and 142b. That is, the diffusion member c may be fitted between the first rear support surface 152a and the first locking protrusion 142a and between the first rear support surface 152a and the second locking protrusion 142b in the front and rear direction.

The first locking protrusion 142a, which is elastically deformable, may press a lower portion of the diffusion member c toward the first rear support surface 152a. In addition, the second locking protrusion 142b, which is elastically deformable, may press an upper portion of the diffusion member c toward the first rear support surface 152a.

That is to say, by a single operation of coupling the supporter cover 150 to the supporter 140, the operation of coupling the supporter cover 150 to the supporter 140 and the operation of installing the diffusion member c on the supporter 140 may be completed together.

Referring to FIGS. 9 and 11, the second support 143 may support the second lighting 130 in a form of supporting the circuit board b on which the light source a is mounted. As an example, the second support 143 may include a third locking protrusion 143a and a fourth locking protrusion 143b.

The third locking protrusion 143a and the fourth locking protrusion 143b may be disposed to face each other with the circuit board b interposed therebetween, and may be arranged in the vertical direction. The third locking protrusion 143a is disposed to support the lower side of the circuit board b, and the second locking protrusion 142b is disposed to support the upper side of the circuit board b.

The third locking protrusion 143a and the fourth locking protrusion 143b may be formed in a shape that protrudes rearward from the rear surface of the supporter main body 141. In the present embodiment, it is illustrated that each of the third locking protrusion 143a and the fourth locking protrusion 143b is formed in a shape of a hook member protruding rearward from the rear surface of the supporter main body 141.

The lower side of the circuit board b may be fitted between the supporter main body 141 and the third locking protrusion 143a. In addition, the upper side of the circuit board b may be fitted between the supporter main body 141 and the fourth locking protrusion 143b.

The third locking protrusion 143a and fourth locking protrusion 143b may press the lower side and the upper side of the circuit board b forward, respectively. As a result, the front surface of the circuit board b is in close contact with the supporter main body 141, so that a location in the front and rear direction of the circuit board b may be constrained.

As an example, the fourth locking protrusion 143b may be constructed to be elastically deformable in the vertical direction. Work to couple the circuit board b of the second lighting 130 to the second support 143 may be achieved in a form of fitting the lower side of the circuit board b between the supporter main body 141 and the third locking protrusion 143a, then pulling the fourth locking protrusion 143b upward to widen a gap between the third locking protrusion 143a and the fourth locking protrusion 143b, and then fitting the upper side of the circuit board b between the supporter main body 141 and the fourth locking protrusion 143b.

In addition, an inclined surface may be formed on a front surface of the fourth locking protrusion 143b. The inclined surface may be formed to be inclined downward forwardly. The inclined surface formed on the front surface of the fourth locking protrusion 143b may contribute to making assembly of the second lighting 130 easier.

The second cover 153 disposed on the supporter cover 150 may be disposed at a rear area of the second lighting 130. The second cover 153 may have a second rear support surface 153a and a second through-hole 153b.

The second rear support surface 153a is disposed to support the diffusion member c disposed in the second lighting 130 from the rear. Such a second rear support surface 153a may form an inclined surface inclined in the lateral direction, more specifically, an inclined surface inclined forward in a direction closer to the camera 110.

The second through-hole 153b may be defined to extend through the second rear support surface 153a in the front and rear direction. Such a second through-hole 153b may form a passage for exposing the diffusion member c to the rear of the supporter cover 150 in the second rear support surface 153a.

The second cover 153 may include a second lower support surface 153c. The second lower support surface 153c may be disposed at a lower vertical level than the second through-hole 153b and may protrude forward from the second rear support surface 153a. The diffusion member c may be seated on the second lower support surface 153c, and the second lower support surface 153c may support the diffusion member c from below.

Additionally, the second cover 153 may further include a second upper support surface 153d. The second upper support surface 153d may be disposed at a higher vertical level than the second through-hole 153b and may protrude forward from the second rear support surface 153a. The diffusion member c may be inserted into a space between the second lower support surface 153c and the second upper support surface 153d, and a location in the vertical direction of the diffusion member c may be regulated by the second lower support surface 153c and the second upper support surface 153d.

As described above, when the supporter cover 150 and the supporter 140 are coupled to each other in the front and rear direction with the diffusion member c fitted between the second lower support surface 153c and the first upper support surface 152d, the diffusion member c may be fitted between the second rear support surface 153a and the locking protrusions 143a and 143b. That is, the diffusion member c may be fitted between the second rear support surface 153a and the third locking protrusion 143a and between the second rear support surface 153a and the fourth locking protrusion 143b in the front and rear direction.

### [Functions and effects of filming module]

Hereinafter, operations and effects of the cooking appliance according to Present Example 1 of the present invention will be described.

Referring to FIGS. 2 to 4, the filming module 100 may be disposed at the location biased upward from the center in the vertical direction of the door 20. The camera 110 disposed in such a filming module 100 may film the inside of the cooking chamber 10a while looking down on the cooking chamber 10a at the front upper side of the cooking chamber 10a.

Additionally, the lightings 120 and 130 disposed in the filming module 100 may flash light toward the cooking chamber 10a and toward the area where the filming is performed by the camera 110. According to the present example, the lightings 120 and 130 may flash light toward the cooking chamber 10a from the front upper side of the cooking chamber 10a.

In the present example, the lightings 120 and 130 may illuminate the interior of the cooking chamber 10a while preventing a shadow of the food from appearing in front of the food. Such lightings 120 and 130 may contribute to improving a quality of results of filming by the filming module 100 by preventing the food from being obscured by the shadow in the image captured by the camera 110.

As described above, the lightings 120 and 130 may include the first lighting 120 and the second lighting 130. Among those, the first lighting 120, among the lightings 120 and 130, may be disposed at the outermost side in the lateral direction. Such a first lighting 120 may irradiate light toward the cooking chamber 10a at the location biased upward from the center in the vertical direction of the cooking chamber 10a, in the direction inclined downward.

The second lighting 130 may be disposed between the camera 110 and the first lighting 120 in the lateral direction. Such a second lighting 130 may irradiate light in the direction inclined toward the camera 110, that is, in the direction inclined toward the center in the lateral direction of the door 20.

According to the present example, the first lighting 120 and the second lighting 130 may be disposed between the end in the lateral direction of the door 20 and the camera 110. The first lighting 120 and the second lighting 130 may be disposed at locations closer to the end in the lateral direction of the door 20 than to the camera 110.

For example, the first lighting 120 and the second lighting 130 may be disposed at locations much closer to the end in the lateral direction of the door 20 than to the center in the lateral direction of the door 20, that is, at locations spaced far from the camera 110 in the lateral direction.

As an example, the first lighting 120 may be disposed at the location closer to the end in the lateral direction of the door 20 than to the camera 110, and the second lighting 130 may be disposed at a location closer to the first lighting 120 than to the camera 110.

For example, the second lighting 130 may be disposed at a location spaced apart from the camera 110 by a distance at least twice the distance between the end in the lateral direction of the door 20 and the second lighting 130, and the first lighting 120 may be disposed at a location spaced apart from the camera 110 by a distance greater than the distance between the second lighting 130 and the camera 110.

When the lighting is disposed to be biased toward the center in the lateral direction of the door 20, that is, when the lighting is disposed too close to the camera 110, light irradiated from the lighting may affect the filming results of the camera 110.

Light irradiated from the light sources a of the lightings 120 and 130 may be reflected by the inner glass sheets 25 and 27. When the light sources a of the lightings 120 and 130 are disposed adjacent to the camera 110, a possibility that light emitted from the light sources a and then reflected from the inner glass sheets 25 and 27 will be captured by the camera 110 as the light enters a field of view of the camera 110 increases.

When the light reflected from the inner glass sheets 25 and 27 is captured by the camera 110 as such, problems of deteriorating a quality of the image filmed by the camera 110, such as light blur, a flare phenomenon, ghosting, and the like appearing in the image captured by the camera 110, may occur.

Considering the above, in the present example, the first lighting 120 and the second lighting 130 may be disposed at the locations far away from the camera 110 in the lateral direction, as described above. Preferably, the first lighting 120 and the second lighting 130 may be disposed at locations where light reflected from the inner glass sheets 25 and 27 after being emitted from the light sources a of the first lighting 120 and the second lighting 130 is not able to enter the field of view of the camera 110.

As the first lighting 120 and the second lighting 130 are disposed at such locations, even when light emitted from the light sources a is reflected from the inner glass sheets 25 and 27, a possibility that such reflected light will be captured by the camera 110. becomes very low.

The filming module 100, which includes the first lighting 120 and the second lighting 130, may ensure that the quality of the image filmed by the camera 110 is less affected by light reflected from the inside of the door 20, and the quality of the image filmed by the camera 110 is improved.

In one example, as the lightings 120 and 130 are disposed adjacent to the end in the lateral direction of the door 20 as described above, a front central area of the cooking chamber 10a may become relatively dark compared to other areas.

This is because, as the lightings 120 and 130, especially the first lightings 120, are disposed at locations biased to both sides of the door 20, areas biased to the sides of the cooking chamber 10a are mainly illuminated, and the central area of the cooking chamber 10a, especially, the front central area of the cooking chamber 10a where it is difficult for light of the first lighting 120 to reach, is poorly illuminated.

Considering the above, in the present example, the second lighting 130 is disposed between the camera 110 and the first lighting 120, and such second lighting 130 is constructed to irradiate light in the direction inclined toward the camera 110, that is, the direction inclined toward the center in the lateral direction of the cooking chamber 10a. The second lighting 130 disposed as such may irradiate light toward the front central area of the cooking chamber 10a.

Such a second lighting 130 may be disposed between the camera 110 and the first lighting 120 as described above. That is to say, the second lighting 130 may be disposed closer to the camera 110 than to the first lighting 120.

When the second lighting 130 is disposed at the outermost side in the lateral direction of the filming module 100 like the first lighting 120, the second lighting 130 may illuminate a rear central area of the cooking chamber 10a, but in fact, it may be not easy for the second lighting 130 to illuminate the front central area of the cooking chamber 10a.

Considering the above, in the present example, the second lighting 130 may be disposed at a certain distance from the camera 110, but may be disposed closer to the center in the lateral direction of the cooking chamber 10a than the first lighting 120.

The second lighting 130 disposed as described above allows the front central area of the cooking chamber 10a, where it is difficult for light of the first lighting 120 to reach, to be illuminated further, thereby contributing to making the illumination throughout the cooking chamber 10a, including the front central area of the cooking chamber 10a, more effective.

The cooking appliance in the present example as described above prevents the food from being obscured by the shadow in the image filmed by the camera 110 while ensuring even illumination of the inside of the cooking chamber 10a, thereby effectively improving the quality of results of filming by the filming module 100.

In addition, the cooking appliance in the present example allows the lightings 120 and 130 installed in the door 20 to illuminate light from the front upper side of the cooking chamber 10a toward the cooking chamber 10a, thereby preventing the shadow of the food from appearing in front of the food, and ensuring the even illumination of the inside of the cooking chamber 10a.

In addition, in the present example, the locations of the lightings 120 and 130 may be set to locations sufficiently spaced apart from the camera 110 such that light emitted from the lightings 120 and 130 is not able to enter the field of view of the camera 110 even when being reflected from the inner glass sheets 25 and 27.

In addition, in the present example, as the lightings 120 and 130 are disposed at the locations spaced apart from the camera 110, illumination of the front central area of the cooking chamber 10a, which may become relatively dark compared to other areas of the cooking chamber 10a, may be additionally achieved by the second lighting 130.

The cooking appliance in the present example, which includes the lightings 120 and 130 disposed as such, suppresses the light reflection occurring inside the door 20 from affecting the quality of the filming results, and allows the illumination throughout the cooking chamber 10a, including the front central area of the cooking chamber 10a, to be achieved effectively, thereby effectively improving the quality of the image filmed in the cooking appliance.

### [Present Example 2 of filming module]

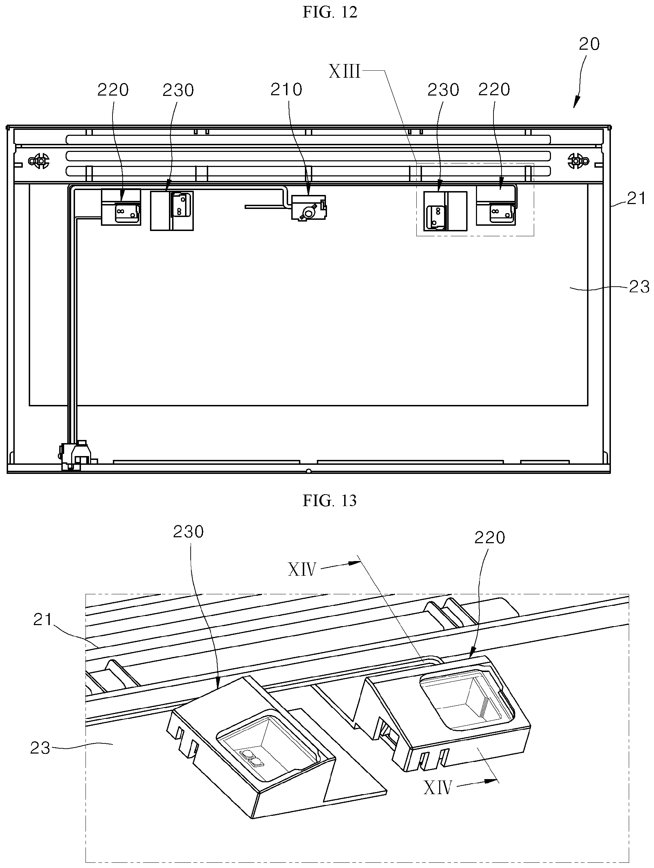

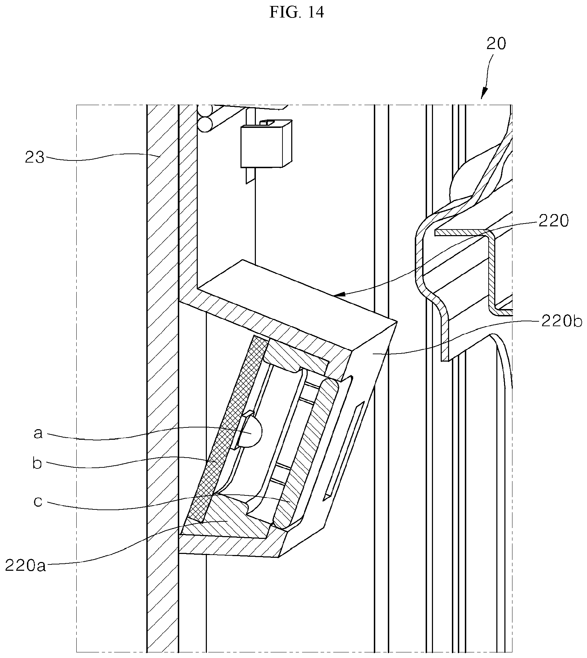

FIG. 12 is a rear view showing a door of a cooking appliance according to Present Example 2 of the present invention, FIG. 13 is an enlarged rear perspective view of a portion "XIII" in FIG. 12, and FIG. 14 is a cross-sectional view taken along a line "XIV-XIV" in FIG. 13.

FIGS. 12 and 13 show the door from which the rear frame and the inner glass sheets are removed.

Referring to FIGS. 12 to 14, the cooking appliance according to Present Example 2 of the present invention may include a camera module 210, a first lighting module 220, and a second lighting module 230.

A main difference between the cooking appliance according to the present example and the cooking appliance illustrated in the above-described example is that the first lighting module 220 and the second lighting module 230 are not mounted on one supporter together with the camera module 210, but form independent modules, respectively.

Referring to FIGS. 13 to 15, the first lighting module 220 in the present example may include the light source a, the circuit board b, and a first supporter 220a. The first supporter 220a is constructed to support the circuit board b on which the light source a is mounted. As an example, the first supporter 220a may be formed in a polyhedral shape, and a hollow extending through the first supporter 220a in the front and rear direction may be defined in the first supporter 220a.

In the first lighting module 220, the circuit board b may be supported on a front surface of the first supporter 220a, and the light source a may be disposed inside the first supporter 220a in which the hollow is defined. Light emitted from the light source a may pass through the inside of the first supporter 220a and then diffuse via the diffusion member c to illuminate the inside of the cooking chamber.

The first lighting module 220 may further include a second supporter 220b. The second supporter 220b may cover the first supporter 220a from the outside and may be coupled to the first supporter 220a. Such a second supporter 220b may support the first supporter 220a and may be coupled to the door 20, more specifically, the outer glass sheet 23.

The first supporter 220a may support the circuit board b such that the circuit board b remains inclined downward. Such a first supporter 220a may support the circuit board b such that the light source a may irradiate light in the direction inclined downward.

In addition, the second supporter 220b may support the diffusion member c such that the diffusion member c remains inclined downward. Such a second supporter 220b may couple the first supporter 220a and the circuit board b and the light source a supported by the first supporter 220a to the door 20, and support the diffusion member c such that light emitted from the first lighting module 220 may be diffused in the direction inclined downward.

In one example, the first supporter 220a and the second supporter 220b may be disposed not only in the first lighting module 220, but also in the second lighting module 230. As an example, the second lighting module 230 may include the first supporter 220a and the second supporter 220b that are rotated about 90 ° around a front and rear direction axis compared to the first supporter 220a and the second supporter 220b disposed in the first lighting module 220.

In the second lighting module 230, the first supporter 220a may support the circuit board b such that the light source a may irradiate light in the direction toward the center in the lateral direction of the cooking chamber, and the second supporter 220b may support the diffusion member c such that light emitted from the first lighting module 220 may diffuse in the direction toward the center in the lateral direction of the cooking chamber.

As a result, the first lighting module 220 and the second lighting module 230 have the same configuration. For example, the second lighting module 230 may be formed in the shape in which the first lighting module 220 is rotated by approximately 90 ° around the front and rear direction axis. That is to say, the first lighting module 220 and the second lighting module 230 may be provided as a result of changing only an installation direction of one type of module.

The cooking appliance in the present example as described above allows both the first lighting module 220 and the second lighting module 230 to be implemented without difficult and complicated design changes using one type of module, thereby reducing a cost and a time for manufacturing the cooking appliance.

In addition, the cooking appliance in the present example allows the first lighting module 220 and the second lighting module 230 to be partially replaced easily when necessary, thereby reducing a cost and a time required for maintenance of the cooking appliance.

### [Present Examples 3 and 4 of filming module]

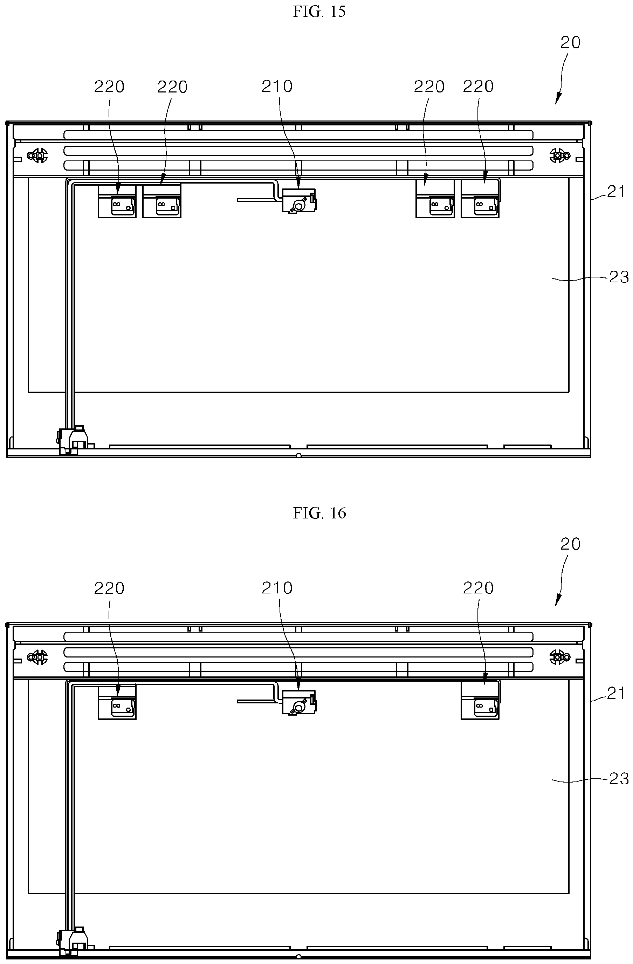

FIG. 15 is a rear view showing a door of a cooking appliance according to Present Example 3 of the present invention, and FIG. 16 is a rear view showing a door of a cooking appliance according to Present Example 4 of the present invention.

Referring to FIG. 15, in the cooking appliance according to Present Example 3 of the present invention, a pair of first lighting modules 220 may be disposed on both sides of the camera module 210.

A main difference between the cooking appliance according to the present example and the cooking appliance illustrated in Present Example 2 is that the cooking appliance includes only the first lighting modules 220 and does not include the second lighting modules 230 (see FIG. 12). That is, in the cooking appliance in the present example, the second lighting module 230 in the cooking appliance illustrated in Present Example 2 may be replaced with the first lighting module 220.

As an example, such type of lighting module arrangement structure may be applied to a cooking appliance that has a smaller lateral direction length than the cooking appliance illustrated in the above-described example. The cooking appliance in the present example to which such lighting module arrangement structure is applied may allow the illumination throughout the cooking chamber, including the front central area of the cooking chamber, to be achieved more effectively even with the lighting using only the first lighting modules 220.

In addition, referring to FIG. 16, in the cooking appliance according to Present Example 4 of the present invention, one first lighting module 220 may be disposed on each of both sides of the camera module 210. A main difference between the cooking appliance according to the present example and the cooking appliance illustrated in the Present Example 3 is the number of first lighting modules 220.

That is, while a total of four first lighting modules 220 are disposed in the cooking appliance in the above-described example, a total of two first lighting modules 220, which is less than four, are disposed in the cooking appliance in the present example.

As an example, such type of cooking appliance may be applied to a cooking appliance with a smaller lateral direction length than the cooking appliance illustrated in the above-described example.

### [Present Examples 5 and 6 of filming module]

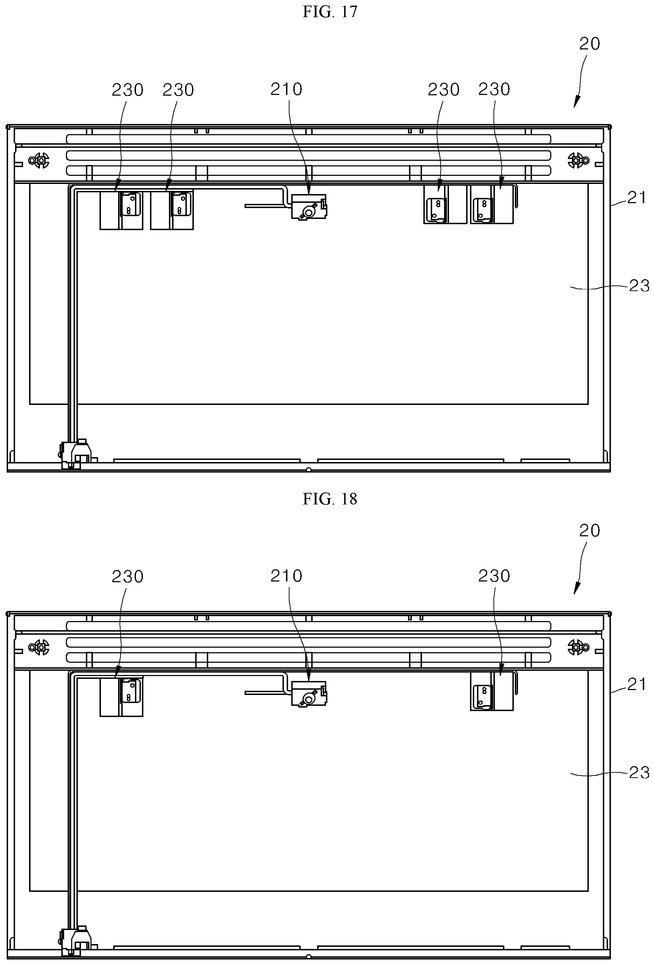

FIG. 17 is a rear view showing a door of a cooking appliance according to Present Example 5 of the present invention, and FIG. 18 is a rear view showing a door of a cooking appliance according to Present Example 6 of the present invention.

Referring to FIG. 17, the cooking appliance according to Present Example 5 of the present invention may include the camera module 210 and a pair of second lighting modules 230.

A main difference between the cooking appliance according to the present example and the cooking appliance illustrated in Present Example 2 is that the cooking appliance includes only the second lighting modules 230 and does not include the first lighting modules 220 (see FIG. 12). That is, in the cooking appliance in the present example, the first lighting module 220 in the cooking appliance illustrated in Present Example 2 may be replaced with the second lighting module 230.

As an example, such type of lighting module arrangement structure may be applied to a cooking appliance having a smaller vertical direction length than the cooking appliance illustrated in the above-described example. The cooking appliance in the present example to which such lighting module arrangement structure is applied may allow the illumination throughout the cooking chamber, including a lower area of the cooking chamber, to be achieved more effectively even with the lighting using only the second lighting modules 230.

In addition, referring to FIG. 18, in the cooking appliance according to Present Example 6 of the present invention, one second lighting module 230 may be disposed on each of both sides of the camera module 210. A main difference between the cooking appliance according to the present example and the cooking appliance illustrated in Present Example 5 is the number of second lighting modules 230.

That is, compared to a total of four second lighting modules 230 disposed in the cooking appliance in the above-described example, a total of two lighting modules 230, which is less than four, are disposed in the cooking appliance in the present example.

As an example, such type of cooking appliance may be applied to a cooking appliance having a smaller lateral direction length than the cooking appliance illustrated in the above-described example.

### [Present Example 7 of filming module]

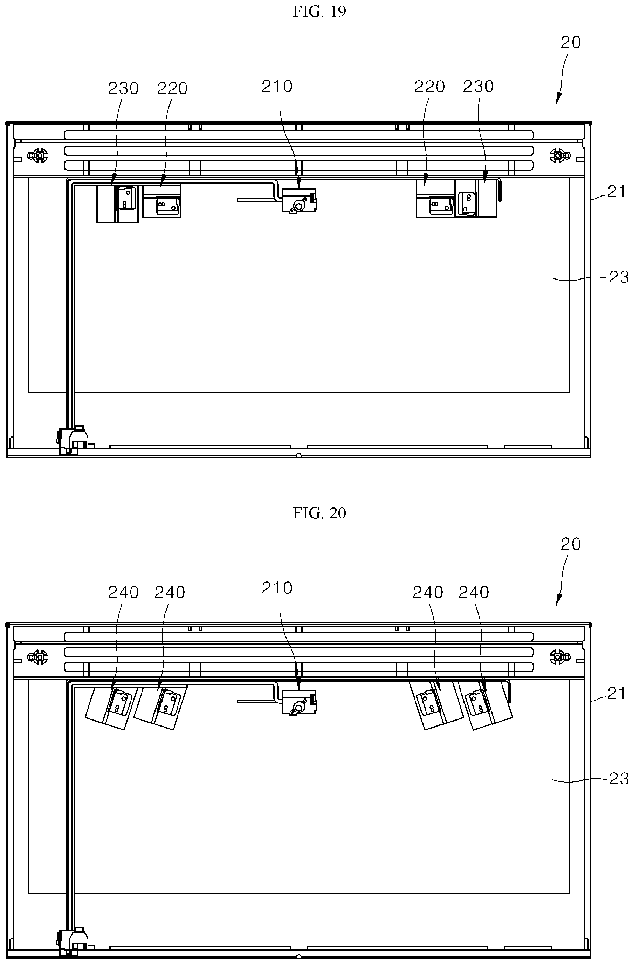

FIG. 19 is a rear view showing a door of a cooking appliance according to Present Example 7 of the present invention.

Referring to FIG. 19, the cooking appliance according to Present Example 7 of the present invention may include the camera module 210, the first lighting module 220, and the second lighting module 230, similar to the cooking appliance illustrated in Present Example 2.

Main differences between the cooking appliance according to the present example and the cooking appliance illustrated in Present Example 2 are locations of the first lighting module 220 and the second lighting module 230. That is, in the cooking appliance according to the present example, a pair of second lighting modules 230 may be arranged to be spaced apart from each other in the lateral direction with the camera module 210 interposed therebetween, and each first lighting module 220 may be disposed between the camera module 210 and each second lighting module 230.

As an example, such type of lighting module arrangement structure may be applied to a cooking appliance that has a smaller lateral direction length than the cooking appliance illustrated in Present Example 2. In this case, even when the second lighting module 230, which irradiates light in the direction biased toward the center in the lateral direction of the cooking chamber, is disposed further from the center in the lateral direction of the cooking chamber than the first lighting module 220, sufficiently effective illumination of the front central area of the cooking chamber may be achieved.

### [Present Example 8 of filming module]

FIG. 20 is a rear view showing a door of a cooking appliance according to Present Example 8 of the present invention.

Referring to FIG. 20, the cooking appliance according to Present Example 8 of the present invention may include the camera module 210 and third lighting modules 240.

A main difference between the cooking appliance according to the present example and the cooking appliance illustrated in Present Example 2 is the third lighting module 240. That is, in the cooking appliance in the present example, at least one of the first lighting modules 220 (see FIG. 12) and the second lighting modules 230 (see FIG. 12) in the cooking appliance illustrated in Present Example 2 may be replaced with the third lighting module 240.

The third lighting module 240 may be provided in a form in which the first lighting module 220 or the second lighting module 230 is rotated around the front and rear direction axis, for example, the first lighting module 220 or the second lighting module 230 is rotated to the left or to the right by approximately 45 ° around the front and rear direction axis.

Each third lighting module 240 provided as such may irradiate light in the direction inclined downward, which is the direction between the downward direction and the direction toward the center in the lateral direction of the cooking chamber.

That is to say, each third lighting module 240 may provide the function of the first lighting module 220 and the function of the second lighting module 230 illustrated in the above-described example, that is, the function of the first lighting module 220 of irradiating light in the direction inclined downward from the front upper side of the cooking chamber and the function of the second lighting module 230 of irradiating light toward the center in the lateral direction of the cooking chamber together.

The cooking appliance in the present example including such third lighting modules 240 may allow the effective illumination to be achieved with only one type of lighting module, thereby reducing the cost and the time required for manufacturing and maintaining the cooking appliance.

As an example, a pair of third lighting modules 240 may be disposed on each of both sides of the camera module 210 in the lateral direction. That is, both the first lighting module 220 and the second lighting module 230 in the cooking appliance illustrated in Present Example 2 may be replaced with the third lighting modules 240.

As another example, only the first lighting module 220 in the cooking appliance illustrated in Present Example 2 may be replaced with the third lighting module 240, and only the second lighting module 230 in the cooking appliance illustrated in Present Example 2 may be replaced with the third lighting module 240.

As another example, only one of the pair of first lighting modules 220 disposed in the cooking appliance illustrated in Present Example 2 may be replaced with the third lighting module 240, and only one of the pair of second lighting modules 230 disposed in the cooking appliance illustrated in Present Example 2 may be replaced with the third lighting module 240.

The present invention has been described with reference to the embodiment shown in the drawings, but this is merely illustrative. Those skilled in the art will understand that various modifications and other embodiments are possible. Therefore, the true technical protection scope of the present invention should be determined by the scope of the patent claims below.

## Claims

1. A cooking appliance comprising:
a main body (10) having a cooking chamber (10a) defined therein;
a door (20) disposed at a front side of the main body (10) and configured to open and close the cooking chamber (10a);
a camera (110) disposed inside the door (20) and configured to film the cooking chamber (10a); and
a lighting (120, 130) disposed inside the door (20) and configured to illuminate an area filmed by the camera (110),
wherein the lighting (120, 130) includes a first lighting (120) disposed on at least one of one side and an other side in a lateral direction of the camera (110).

2. The cooking appliance of claim 1, wherein the first lighting (120) is disposed at a location biased upward from a center in a vertical direction of the door (20), and wherein the first lighting (120) is configured to irradiate light in a direction inclined downward.

3. The cooking appliance of claim 1 or 2, wherein the first lighting (120) is configured to irradiate light in a direction between a direction toward a rear surface of the cooking chamber (10a) and a direction toward a bottom surface of the cooking chamber (10a).

4. The cooking appliance of any one of the preceding claims, wherein the first lighting (120) includes a light source (a) configured to irradiate light in a direction inclined downward, and a diffusion member (c) configured to cover the light source (a) from the rear.

5. The cooking appliance of any one of the preceding claims, further comprising a second lighting (130) disposed between the camera (110) and the first lighting (120),
wherein the second lighting (130) is configured to irradiate light in a direction inclined toward the camera (110).

6. The cooking appliance of claim 5, wherein the second lighting (130) is configured to irradiate light in a direction between a direction toward a rear surface of the cooking chamber (10a) and the lateral direction toward the camera (110).

7. The cooking appliance of claim 5 or 6, wherein the first lighting (120) includes a pair of first lightings (120) arranged in the lateral direction and the camera (110) is disposed between the pair of first lightings (120),
wherein each second lighting (130) is disposed between the camera (110) and each first lighting (120).

8. The cooking appliance of any one of the preceding claims 5 to 7, wherein the first lighting (120) and the second lighting (130) are disposed between an end in the lateral direction of the door (20) and the camera (110), and
wherein the first lighting (120) and the second lighting (130) are disposed at locations closer to the end in the lateral direction of the door (20) than to the camera (110).

9. The cooking appliance of claim 8, wherein the second lighting (130) includes a pair of second lightings (130) arranged in the lateral direction with the camera (110) interposed therebetween.

10. The cooking appliance of claim 9, wherein the first lighting (120) includes a pair of first lightings (120) and the pair of first lightings (120) are arranged in the lateral direction with the camera (110) and the pair of second lightings (130) interposed therebetween.

11. The cooking appliance of any one of the preceding claims 8 to 10, wherein the second lighting (130) is disposed at a location closer to the first lighting (120) than to the camera (110).

12. The cooking appliance of any one of the preceding claims 5 to 11, wherein the second lighting (130) includes a light source (a) configured to irradiate light rearward, and a diffusion member (c) forming a plane inclined toward the camera (110) and covering the light source (a) from the rear.

13. The cooking appliance of any one of the preceding claims 5 to 12, further comprising a supporter (140) supporting at least one of the first lighting (120) and the second lighting (130) and coupled to the door (20),
wherein at least one of the first lighting (120) and the second lighting (130) includes a light source (a) configured to irradiate light rearward,
wherein the light source (a) is coupled to the supporter (140).

14. The cooking appliance of claim 13, further comprising a diffusion member (c) covering the light source (a) from the rear,
wherein the diffusion member (c) forms a plane perpendicular to a light irradiating direction of the light source (a) disposed in the first lighting (120).

15. The cooking appliance of claim 13, further comprising:
a diffusion member (c) covering the light source (a) from the rear; and
a supporter cover (150) supporting the diffusion member (c) and coupled to the supporter (140).
